(19) Europäisches Patentamt
European Patent Office
Office européen des brevets

(11) Numéro de publication: **0 013 532**
**B1**

# (12) FASCICULE DE BREVET EUROPEEN

(45) Date de publication du fascicule du brevet: **27.10.82**

(51) Int. Cl.³: **C 08 G 59/06**

(21) Numéro de dépôt: **79420071.7**

(22) Date de dépôt: **20.12.79**

## (54) Procédé de préparation de polyéthers glycidiques de polyphénols.

(30) Priorité: **05.01.79 FR 7900682**

(43) Date de publication de la demande:
**23.07.80 Bulletin 80/15**

(45) Mention de la délivrance du brevet:
**27.10.82 Bulletin 82/43**

(84) Etats contractants désignés:
**AT CH DE FR GB IT NL**

(56) Documents cités:
**DE - B - 1 081 666**
**US - A - 3 519 653**

**DIE MAKROMOLEKULARE CHEMIE, vol. 179, no. 7, juillet 1978, ROKICKI, G et al. "The synthesis of epoxy resins in dipolar, aprotic solvents", pages 1661—1671.**

(73) Titulaire: **RHONE-POULENC CHIMIE DE BASE**
**25, quai Paul Doumer**
**F-92408 Courbevoie (FR)**

(72) Inventeur: **Locatelli, Jean-Louis**
**Les Charavelle 10, rue Charavel**
**F-38200 - Vienne (FR)**

(74) Mandataire: **Varniere-Grange, Monique**
**RHONE-POULENC RECHERCHES Centre de Recherches de Saint-Fons Service Brevets B.P. 62**
**F-69190 Saint-Fons (FR)**

**EP 0 013 532 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé de préparation de polyéthers glycidiques de polyphénols

La présente invention a pour objet un procédé de préparation de polyéthers glycidiques de polyphénols, à partir de sels alcalins de polyphénols et de halo-1 époxy-2,3 alcanes.

Ces éthers sont plus couramment désignés par l'expression "résines époxydes". Ces résines constituent une classe de produits caractérisés par la présence de cycles oxirannes

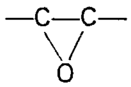

qui conduisent, après réticulation, à des systèmes dont les propriétés sont remarquables en divers points. Ceci a largement contribué au développement de ce type de résines, dans de nombreux domaines d'application.

Parmi ces résines, celles qui sont traditionellement issues de la réaction du bisphénol-A [bis(hydroxy-4 phényl)-2,2 propane] et de l'épichlorhydrine présentent un intérêt tout particulier.

La présente invention a donc pour objet un procédé de préparation de polyéthers glycidiques, notamment du bisphénol-A, par réaction en milieu anhydre, aprotique et hétérogène de sels alcalins de polyphénols et de halo-1 époxy-2,3 alcanes.

Le procédé selon l'invention convient particulièrement bien à la préparation de résines liquides.

Ce type de résines est conventionnellement préparé par réaction du bisphénol-A, sur de l'épichlorhydrine, en présence d'eau et d'un agent alcalin.

De très nombreux precédé ont été décrits dans des travaux antérieurs.

Par exemple, le brevet des Etats-Unis d'Amérique 2 801 227 enseigne un procédé de fabrication d'éther diglycidique de polyphénols. Ce procédé consiste à ajouter une solution aqueuse d'hydroxyde alcalin à une solution de polyphénol dans de l'épichlorhydrine, à raison d'au moins 3 moles d'épichlorhydrine par équivalent hydroxyle du phénol. L'eau et une partie de l'épichlorhydrine sont distillées du milieu.

Dans ce procédé il est essentiel de contrôler la vitesse d'introduction de la solution d'hydroxyde alcalin et la vitesse de distillation de telle sorte que le milieu réactionel contienne de 0,3 à 2% en poids d'eau. La réaction entre l'épichlorhydrine et le polyphénol se déroule à une température de l'ordre de 120°C. En pratique, la totalité de l'hydroxyde alcalin (de la soude) n'est additionné qu'au bout de 3 à 5 heures. L'excès d'épichlorhydrine est alors éliminé par distillation et on introduit un solvant dans le milieu réactionnel de manière à séparer la résine, du sel formé (chlorure de sodium).

Un autre type de procédé s'appuie sur le principe selon lequel l'agent alcalin joue un double rôle dans la synthèse envisagée: un rôle catalytique pour favoriser la condensation du polyphénol et de l'épichlorhydrine, et un rôle d'agent de déshydrochloration, pour transformer les groupements "chlorhydrines" en groupes oxirannes. De tels procédés se déroulent donc en deux stades.

Ainsi, le brevet français 1 336 444 décrit un tel procédé en deux stades, par lequel on met en contact une mole de bisphénol-A et au moins 10 moles d'épichlorhydrine à une température de l'ordre de 65°C, dans une première étape, en ajoutant progressivement (ou par incrément) une solution aqueuse à 50% de soude, sur une période s'étalant de 2 à 4 heures, la quantité de soude introduite dans cette étape étant inférieure à 16% de la quantité totale requise, — cette quantité totale étant de 2 moles de soude par mole de bisphénol-A engagé. Puis on élimine l'eau par distillation sous forme de son azéotrope avec l'épichlorhydrine; ainsi, une partie seulement de l'épichlorhydrine en excès est éliminée du milieu réactionnel.

Dans une deuxième étape, on effectue la déshydrochloration vers 99°C, dans l'épichlorhydrine restante, en ajoutant le complément de soude comme agent de déshydrochloration, sous forme de paillettes. Au bout d'une heure environ, on distille l'excédent d'épichlorhydrine. On dissout alors la résine obtenue dans un solvant; on lave avec de l'eau, obtenant deux phases, une phase aqueuse renferment le chlorure de sodium formé, et une phase organique contenant la résine. On sépare la phase organique et on la traite de nouveau pendant une heure à 90°C environ, avec de la soude en paillettes. La résine est alors récupérée par diverses opérations de lavage, neutralisation et séchage.

Ces procédés sont extrêmement lourds à mettre en oeuvre: ils nécessitent des durées de réaction relativement longues, des contrôles stricts des diverses conditions de réaction et de nombreuses étapes pour purifier et/ou récupérer la résine recherchée. D'autre part, les pertes en épichlorhydrine, engagée nécessairement en excès, ne sont pas négligeables même lorsque le plus grand soin est apporté à la mise en oeuvre de ce genre de procédé.

Récemment (cf. brevet américain n° 3 519 653), il a été monté qu'il est possible de préparer des intermédiaires utiles à la fabrication de résines époxydes complexes en faisant réagir une suspension de sels alcalins de phénols dihydroxylés anhydres, dans une quantité importante d'épichlorhydrine. L'épichlorhydrine joue alors un double rôle: elle est d'une part un réactif, et d'autre part un solvant de la résine formée, rendant ainsi le milieu réactionnel manipulable.

Toutefois, cette technique, dont l'intérêt de principe n'est pas contesté, permet difficilement d'obtenir des résines liquides de bonne qualité. Les sels alcalins de phénols dihydroxylés étant insolubles dans l'épichlorhydrine, la mise en contact des deux réactifs est difficile; la réaction se déroule relativement lentement. Le développement à l'échelle industrielle d'une telle technique est en outre compromis par les quantités importantes d'épichlorhydrine qui sont nécessairement utilisées et qu'il convient de recycler pour ne pas grever l'économie d'un tel procédé.

Devant ces difficultés, des auteurs (cf. MACROMOL Chem. 179, 7, 1661—1671, 1978) ont proposé de réaliser la synthèse des résines en cause à partir des sels alcalins de phénols dihydroxylés et de halo-1 époxy-2,3 alcanes, en milieu anhydre, aprotique et homogène.

Ces auteurs ont constaté que le paramètre décisif de ladite synthèse est la solubilité totale du sel alcalin de diphénol dans le milieu réactionnel. Comme ces sels sont insolubles dans la plupart des composés organiques, et en particulier dans l'épichlorhydrine, les auteurs ont dû utiliser, pour travailler en milieu homogène, des quantités importantes de diméthylsulfoxyde comme solvant. Ces auteurs ont en outre constaté que seul ce composé pourrait convenir dans la synthèse envisagée, sous réserve que la concentration du sel alcalin de diphénol ne dépasse pas une valeur limite, qui est de 0,7 mole par $dm^3$, dans le cas du sel disodique du bisphénol-A, à 80°C. En fin de réaction il convient, pour récupérer la résine, d'éliminer le solvant ce qui, à priori, semble difficile en raison du point d'ébullition élevé du diméthylsulfoxyde; en outre, le risque de dégradation de la résine n'est pas négligeable. La Demanderesse a constaté en outre que les résines ainsi fabriquées présentent une coloration inacceptable lorsqu'on envisage leur utilisation ultérieure et que leur viscosité est en général élevée. La Demanderesse a également constaté, dans certaines conditions, l'apparition d'un gel. Le développement d'un tel procédé paraît donc compromis par les difficultés de mise en oeuvre et la qualité insuffisante des résines produites.

Cet examen des solutions antérieurement proposées montre que subsiste un certain nombre de besoins non satisfaits par l'art antérieur dans le cadre de la préparation de polyéthers glycidiques de polyphénols. Ces besoins non satisfaits sont particulièrement ressentis dans le cadre de la préparation de résines liquides. En effet il serait souhaitable de disposer d'un procédé technologiquement simple et rapide à mettre en oeuvre. Il serait également désirable de pouvoir fabriquer des résines de qualité convenable sans être amené à manipuler des quantités importantes de réactifs.

La Demanderesse a maintenant trouvé un procédé qui permet d'atteindre ces objectifs.

La présente invention a donc pour objet un procédé de préparation de polyéthers glycidiques de polyphénols par réaction de sels alcalins de polyphénols et de halo-1 époxy-2,3 alcanes en milieu anhydre et aprotique, caractérisé en ce que celui-ci est choisi dans le groupe constitué par l'acétonitrile, le propionitrile, le benzonitrile et le sulfure d'éthylène.

Selon l'invention, on fait réagir au moins un sel alcalin d'un polyphénol sur au moins un halo-1 époxy-2,3 alcane.

Par sels alcalins de polyphénols on entend des composés de formule $R(OM)_x$, dans laquelle x est un nombre supérieur ou égal à 2 représentant le nombre de groupes hydroxyles phénoliques contenus dans la molécule de polyphénol, M représente un atome de lithium, de sodium, de potassium ou de cesium, M étant de préférence un atome de sodium ou de potassium, et R représente un radical organique portant les groupements hydroxyles phénoliques.

De nombreux polyphénols peuvent être utilisés sous la forme de leurs sels alcalins, dans le cadre de la présente invention.

A titre d'exemples, on peut citer:

— le dihydroxy-1,2 benzène
— le dihydroxy-1,3 benzène
— le dihydroxy-1,4 benzène
— le dihydroxy-1,2 chloro-4 benzène
— le dihydroxy-1,2 bromo-4 benzène
— le dihydroxy-1,2 méthyl-3 benzène
— le dihydroxy-1,3 chloro-5 benzène
— le dihydroxy-1,3 bromo-5 benzène
— le dihydroxy-1,3 méthyl-2 benzène
— le dihydroxy-1,4 chloro-2 benzène
— le trihydroxy-1,2,3 benzène
— le trihydroxy-1,2,4 benzène
— le trihydroxy-1,2,5 benzène
— le trihydroxy-1,3,5 benzène
— le dihydroxy-1,2 naphtalène
— le dihydroxy-1,4 naphtalène
— le dihydroxy-1,5 naphtalène
— le dihydroxy-2,3 naphtalène
— le dihydroxy-1,2 anthracène
— le trihydroxy-1,2,9 anthracène
— le trihydroxy-1,4,9 anthracène
— le trihydroxy-1,2,10 anthracène
— le dihydroxy-4,4′ diphényle
— la dihydroxy-4,4′ diphénylsulfone
— la dihydroxy-2,3 diphénylsulfone
— le tétrahydroxy-2,4,2′,4′ diphényle
— le tétrahydroxy-2,5,2′,5′ diphényle
— le dihydroxy-2,5 diphénylméthane
— le dihydroxy-4,4′ diphénylméthane (Bisphénol-F)
— le bis(hydroxy-4 phényl)-1,1 éthane
— le bis(hydroxy-4 phényl)-1,1 isobutane
— le bis(hydroxy-4 phényl)-2,2 propane (Bisphénol-A)
— le bis(hydroxy-4 phényl)-2,2 butane
— le bis(hydroxy-4, méthyl-2 phényl)-2,2 propane
— le bis(hydroxy-2, tertiobutyl-4 phényl)-2,2 propane

— le bis(hydroxy-2 phényl)-2,2 propane
— l'(hydroxy-2' phényl)-2 (hydroxy-4'' phényl)-2 propane
— le bis(chloro-2, hydroxy-4 phényl)-2,2 propane
— le bis(hydroxy-4 phényl)-2,2 trichloro-1,1,1 éthane
— le bis(hydroxy-4 phényl)-2,2 dichloro-1,1 éthylène
— le tris(hydroxy-4 phényl)méthane
— le tétrakis(hydroxy-4' phényl)-2,2,3,3 butane
— le tétrakis(hydroxy-4' phényl)-2,2,4,4 pentane
— le tétrakis(hydroxy-4' phényl)-2,2,5,5 hexane
— le (hydroxy-4 phényl)-1,1,2,2 éthane
— le bis(dibromo-3,5, hydroxy-4 phényl)-2,2 propane.

La présente invention envisage également l'utilisation de polyphénols de structure plus complexe, sous la forme de leurs sels alcalins, tels que les résines novolaques obtenues, par exemple, par condensation en présence de catalyseurs acides, du phénol, du p-crésol ou d'autres phénols substitués et d'aldehydes comme le formaldéhyde, l'acétaldéhyde, le crotonaldéhyde, etc...

Le procédé selon l'invention s'applique aux sels alcalins de polyphénols, c'est-à-dire qui dérivent de composés renfermant au moins deux groupements hydroxyles phénoliques par molécule et ne renfermant pas de groupements fonctionnels susceptibles d'interférer avec la formation de polyéthers glycidiques recherchés.

Selon la présente invention on peut utiliser des mélanges de deux ou plusieurs sels alcalins de polyphénols, c'est-à-dire un mélange de deux ou plusieurs composés différant par la nature du cation alcalin et/ou dérivant de deux ou plusieurs polyphénols distincts.

Selon un mode de réalisation préféré de la présente invention, on utilise un sel alcalin de diphénol ou un mélange de deux ou plusieurs sels alcalins de diphénols pouvant différer par la nature du cation alcalin et/ou dérivant de deux ou plusieurs diphénols distincts. On utilise, de préférence des sels de sodium ou de potassium de un ou plusieurs diphénols, en particulier les sels de diphénols choisis dans le groupe constitué par: le dihydroxy-1,2 benzène, le dihydroxy-1,4 benzène, le bisphénol-A, le bisphénol-F, le bis(hydroxy-4 phényl)-2,2 dichloro-1,1 éthylène et le bis(dibromo-3,5 hydroxy-4 phényl)-2,2 propane.

Selon une variante préférée de l'invention, on utilise les sels alcalins du bisphénol-A et/ou du bisphénol-F, et plus particulièrement les sels de sodium ou de potassium.

Les sels de sodium du bisphénol-A et/ou du bisphénol-F conviennent particulièrement bien à la mise en oeuvre de la présente invention. On préfère tout particulièrement le sel de sodium du bisphénol-A.

De nombreux halo-1 époxy-2,3 alcanes conviennent à la mise en oeuvre du procédé selon l'invention. On peut citer, à titre d'exemples, le chloro-1 époxy-2,3 propane (plus couramment appelé épichlorhydrine), le bromo-1 époxy-2,3 propane, le chloro-1 époxy-2,3 butane, le chloro-1 méthyl-2 époxy-2,3 propane, ainsi que leurs mélanges.

On utilise de préférence l'épichlorhydrine. Le milieu réactionnel devant être anhydre il conviendra de sécher les réactifs, le cas échéant.

Selon la présente invention, on fait réagir au moins une mole de halo-1 époxy-2,3 alcane par équivalent-gramme de groupements OM en provenance d'au moins un composé de formule $R(OM)_x$ (R, M et x étant définis ci-avant) chargé initialement, en milieu anhydre aprotique et hétérogène. On n'observe pas d'avantage particulier lorsqu'on opère avec plus de 13 moles de halo-1 époxy-2,3 alcane par équivalent-gramme de groupements OM. On opè e de préférence avec 1à 5 moles de halo-1 époxy-2,3 alcane par équivalent-gramme de groupements OM, et de manière encore plus avantageuse, avec de 1 à 3 moles de halo-1 époxy-2,3 alcane par équivalent-gramme de groupements OM.

Les composés de formule $R(OM)_x$ précités étant insolubles dans le milieu réactionnel, il est souhaitable pour une bonne mise en oeuvre du présent procédé, d'opérer avec une agitation suffisante.

Il a été trouvé de manière surprenante que la présence dans le milieu réactionnel d'un composé organique anhydre et polaire, et choisi dans le groupe constitué par l'acétonitrile, le propionitrile, le benzonitrile et le sulfure d'éthylène apporte un effet remarquable sur la vitesse de réaction, et permet d'obtenir des résines de qualité satisfaisante, bien que le milieu réactionnel reste hétérogène.

En général, une quantité de composé organique anhydre et polaire de l'ordre de 10% en poids est ajoutée au milieu réactionnel. Cette quantité représente, de préférence, au moins 30% (en poids) du milieu réactionnel. On peut utiliser des quantités plus importantes, mais au-delà de 80% (en poids) on n'observe pas d'avantage particulier. Selon une variante avantageuse de l'invention, on opère avec 10 à 80% en poids d'acétonitrile, et de préférence avec au moins 30% en poids d'acétonitrile. La température de réaction n'est pas critique et elle est généralement comprise entre 50 et 150°C. Au-dessous de 50°C la réaction est relativement lente, et au-dessus de 150°C, on risque de dégrader plus ou moins la résine obtenue. On opère de préférence à une température comprise entre 80 et 120°C environ. On peut également opérer sous pression autogène ou sous une pression d'azote pouvant atteindre 20 bars.

Le procédé selon l'invention permet en outre la récupération de la résine, en fin de réaction, par des techniques relativement simples et rapides. Par exemple, on peut filtrer le mélange

obtenu renfermant la résine recherchée, l'halogénure alcalin formé lors de la réaction, le composé organique polaire introduit initialement, et le cas échéant, le halo-1 époxy-2,3 alcane qui n'a pas réagi.

Puis, on peut alors soumettre le filtrat renfermant la résine à une distillation, éventuellement sous vide, pour en éliminer le halo-1 époxy-2,3 alcane qui n'a pas réagi et le composé organique polaire.

Le procédé selon l'invention convient notamment à la préparation des résines époxydes liquides, à partir d'épichlorhydrine et de sels alcalins du bisphénol-A et/ou du bisphénol-F, et plus particulièrement à partir du sel disodique du bisphénol-A.

Les exemples ci-après illustrent l'invention sans en limiter le domaine et l'esprit.

Exemples

Preparation du sel disodique du bisphénol-A:

Dans une solution de 40 g de soude et 200 ml de méthanol, on coule une solution de 114 g de bisphénol-A et 144 ml de méthanol. On chauffe le mélange à reflux, pendant 30 minutes, puis on distille 70% du méthanol.

A la pâte restante, on ajoute 234 ml de toluène. On distille alors l'azéotrope méthanol-toluène, puis l'azéotrope eau/toluène. L'opération est arrêtée lorsque le toluène distille seul. On filtre alors le sel disodique du bisphénol-A (appelé dans les exemples ci-après bisphénate de sodium) et on le sèche en étuve sous 26,67 mbar (20 mm Hg) et à 90°C durant 16 heures. Le produit ainsi obtenu est alors engagé à la préparation des résines comme décrit ci-après.

— *Essai témoin a):*

Dans un réacteur en verre muni d'un agitateur central à ancre, d'un réfrigérant à boules et d'un thermomètre, on charge à 60°C:

— 46,25 g (0,5 mol) d'épichlorhydrine
— 3,3 g de bisphénate de sodium anhydre (première fraction)

On porte le milieu réactionnel à 117°C (reflux de l'épichlorhydrine) puis toutes les 20 minutes on introduit, à 8 reprises, une fraction de 3,3 g de bisphénate de sodium anhydre. Au total on a introduit 29,6 g (0,1 mol) de bisphénate de sodium anhydre en 9 fractions égales. Le milieu réactionnel présente l'aspect d'une suspension; l'opération dure au total 3 heures 20 minutes.

Après refroidissement, on sépare la phase solide par filtration, puis le filtrat est évaporé sous 26,67 mbar (20 mm Hg) et en chauffant jusqu'à 140°C.

On obtient ainsi 23 g de résine liquide dont les caractéristiques sont les suivantes:

— viscosité mesurée à 25°C ∼ 100 Pa.s (1000 poises)
— taux d'époxyde pour 100 g : 0,430

— *Essai témoin b):*

En reproduisant le mode opératoire décrit ci-avant, mais en chargeant:

— 92,5 g (1 mol) d'épichlorhydrine
— 27,25 g (0,1 mol) de bisphénate de sodium anhydre sous forme de 9 fractions de 3,1 g chacune, introduites toutes les 20 minutes, on a obtenu 27 g d'une résine liquide dont les caractéristiques sont les suivantes:

— viscosité mesurée à 25°C : 19 Pa.s (190 poises)
— taux d'époxyde pour 100 g : 0,488
— taux de chlore : 0,78%

— *Essai témoin c):*

En reproduisant l'opération décrite à l'essai b) mais en introduisant le bisphénate de sodium anhydre sous forme de 18 fractions de 1,54 g chacune, toutes les 20 minutes, la durée de l'opération étant de 6 heures, on a obtenu 29 g d'une résine liquide dont les caractéristiques sont les suivantes:

— viscosité mesurée à 25°C : 43 Pa.s (430 poises)
— taux d'époxyde pour 100 g : 0,470

— *Essai témoin d):*

Dans un réacteur en verre équipé d'un agitateur ancre, d'un thermomètre et d'une colonne à distiller avec réfrigérant et récepteur, on charge 100 g de diméthylsulfoxyde et 80 ml de toluène. On chauffe jusqu'à 163°C de façon à éliminer toute l'eau présente dans le diméthylsulfoxyde sous forme de l'azéotrope eau/toluène. On recueille 65 ml de distillat. On refroidit à 100°C, et on remplace la colonne par un réfrigérant à boules.

On charge 46,25 g (0,5 mol) d'épichlorhydrine et au total 28,2 g (0,1 mol) de bisphénate de sodium en 6 fractions de 4,7 g introduites toutes les 10 minutes, en maintenant la température à 100°C, la durée de réaction étant d'une heure à compter de l'introduction de la première fraction de bisphénate de sodium. (L'introduction fractionnée du bisphénate de sodium permet d'éviter la gélification du milieu réactionnel, phénomène observé par la Demanderesse lors de nombreux essais de sondage effectués en ayant chargé la totalité du bisphénate de sodium au départ). La suspension ainsi obtenue est filtrée, le gâteau est lavé par 20 ml de diméthylsulfoxyde. Le filtrat est évaporé en chauffant jusqu'à 150°C sous 1,33 mbar (1 mm Hg). On obtient ainsi 33,8 g de résine dont les caractéristiques sont les suivantes:

— viscosité mesurée à 25°C : 21 Pa.s (210 poises)

— taux d'époxyde pour 100 g : 0,491

— taux de chlore : 1,8%

— coloration ⩾18 Gardner.

Exemple n° 1

En utilisant l'appareillage décrit dans l'essai a) on a chargé:

— 92 g (1 mol) d'épichlorhydrine
et
— 78 ml d'acétonitrile.

On porte la masse à 60°C et on ajoute 54,5 g (0,2 mol) de bisphénate de sodium anhydre. On obtient une suspension. On porte l'ensemble à 83°C (reflux de l'acétonitrile) pendant 1 heure, puis on filtre la suspension. Le filtrat est évaporé sous 26,67 mbar (20 mm Hg) et en chauffant jusqu'à 140°C, température maintenue pendant 10 minutes. On refroidit. On obtient 11,5 g d'une résine liquide dont les caractéristiques sont les suivantes:

— viscosité mesurée à 25°C : 10 Pa.s (100 poises)

— taux d'époxyde pour 100 g : 0,525

— coloration <10 Gardner.

Exemple n° 2

Dans l'appareillage décrit précédemment, on a chargé:

— 185 g (2 mol) d'épichlorhydrine
— 156 ml d'acétonitrile.

On chauffe à 60°C et on ajoute 109 g (0,4 mol) de bisphénate de sodium anhydre (pureté: 98%). On chauffe le mélange à 85°C pendant 2 heures 30 minutes. La suspension ainsi obtenue est alors filtrée. Le gâteau est lavé 2 fois par 50 ml d'acétonitrile. Le filtrat est évaporé à 80°C sous 26,67 mbar (20 mm Hg), puis chauffé à 140°C pendant 15 minutes sous 20 mbar (15 mm Hg).

On obtient ainsi 58 g de résine liquide dont les caractéristiques sont les suivantes:

— viscosité mesurée à 25°C : 10,9 Pa.s (109 poises)

— taux d'époxyde pour 100 g : 0,536

— taux de chlore : 0,41%

— coloration <10 Gardner.

Exemple n° 3

On reproduit le mode opératoire de l'exemple n° 2, mais en chargeant 115 ml d'acétonitrile.

On obtient 70,8 g de résine liquide dont les caractéristiques sont les suivantes:

— viscosité mesurée à 25°C : 14,8 Pa.s (148 poises)

— taux d'époxyde pour 100 g : 0,532

— taux de chlore : 0,40%

**Revendications**

1. Procédé de préparation de polyéthers glycidiques de polyphénols par réaction d'au moins un sel alcalin de polyphénol et d'au moins un halo-1 époxy-2,3 alcane, à raison d'au moins 1 mole de halo-1 époxy-2,3 alcane par équivalent-gramme de groupement OM en provenance du sel alcalin de polyphénol, en milieu anhydre et aprotique, caractérisé en ce que celui-ci choisi dans le groupe constitué par l'acétonitrile, le propionitrile, le benzonitrile et le sulfure d'éthylène, ledit composé représentant au moins 10% en poids du milieu réactionnel.

2. Procédé selon la revendication 1, caractérisé en ce que le cation du sel alcalin de polyphénol est choisi dans le groupe constitué par les cations du lithium, du sodium, du potassium, du césium et leurs mélanges.

3. Procédé selon la revendication 1 ou 2, caractérisé en ce que le cation du sel de polyphénol est un cation de sodium ou de potassium.

4. Procédé selon l'une quelconque des revendications précédentes, caractérisé en ce que le cation du sel du polyphénol est un cation de sodium.

5. Procédé selon l'une quelconque des revendications précédentes, caractérisé en ce que le polyphénol est un diphénol.

6. Procédé selon l'une quelconque des revendications précédentes, caractérisé en ce que le polyphénol est choisi dans le groupe constitué par: le dihydroxy-1,2 benzène, le dihydroxy-1,4 benzène, le bisphénol-A, le bisphénol-F, le bis(hydroxy-4 phényl)-2,2, dichloro-1,1 éthylène et le bis(dibromo-3,5, hydroxy-4 phényl)-2,2 propane.

7. Procédé selon l'une quelconque des revendications précédentes, caractérisé en ce que le polyphénol est choisi dans le groupe constitué par le bisphénol-A, le bisphénol-F et leurs mélanges.

8. Procédé selon l'une quelconque des revendications précédentes, caractérisé en ce que le polyphénol est le bisphénol-A.

9. Procédé selon l'une quelconque des revendications précédentes, caractérisé en ce que le halo-1 époxy-2,3 alcane est choisi dans le groupe constitué par le chloro-1 époxy-2,3 propane, le bromo-1 époxy-2,3 propane et leurs mélanges.

10. Procédé selon l'une quelconque des revendications précédentes, caractérisé en ce

que le halo-1 époxy-2,3 alcane est l'épichlorhydrine.

11. Procédé selon l'une quelconque des revendications précédentes, caractérisé en ce que l'on opère en présence d'au plus 13 moles de halo-1 époxy-2,3 alcane par équivalent-gramme de groupement OM en provenance du sel alcalin de polyphénol.

12. Procédé selon l'une quelconque des revendications précédentes, caractérisé en ce que l'on opère en présence d'au plus 5 moles de halo-1 époxy-2,3 alcane par équivalent-gramme de groupement OM en provenance du sel alcalin de polyphénol.

13. Procédé selon l'une quelconque des revendications précédentes, caractérisé en ce que l'on opère en présence d'acétonitrile.

14. Procédé selon l'une quelconque des revendications précédentes, caractérisé en ce que le composé organique représente au plus 80% en poids du milieu réactionnel.

15. Procédé selon la revendication 14, caractérisé en ce que le composé organique représente au moins 30% en poids du milieu réactionnel.

16. Procédé selon l'une quelconque des revendications précédentes, caractérisé en ce que la température de réaction est comprise entre 50 et 150°C et de préférence entre 80 et 120°C.

17. Procédé de préparation d'éthers glycidiques du bisphénol-A par réaction en milieu aprotique et hétérogène, du sel disodique du bisphénol-A sur l'épichlorhydrine à raison de 2 à 10 moles d'épichlorhydrine par mole de sel disodique du bisphénol-A, en présence de 30 à 80% en poids d'acétonitrile, et à une température comprise entre 80 et 120°C.

18. Procédé selon l'une quelconque des revendications précédentes, caractérisé en ce que l'on opère en présence d'au plus 3 moles de halo-1 époxy-2,3 alcane par équivalent-gramme de groupements OM en provenance du sel alcalin de polyphénol.

19. Procédé selon l'une quelconque des revendications précédentes, caractérisé en ce qu'en fin de réaction, on filtre le mélange réactionnel pour éliminer l'halogénure alcalin formé lors de la réaction, puis on soumet le filtrat à une distillation pour en éliminer le halo-1 époxy-2,3 alcane qui n'a pas réagi et le composé organique introduit initialement, et on récupère la résine ainsi obtenue.

**Patentansprüche**

1. Verfahren zur Herstellung von Glycidylpolyethern von Polyphenolen durch Umsetzung mindestens eines Alkalisalzes eines Polyphenols mit mindestens einem 1-Halogen-2,3-epoxyalkan in einem Verhältnis von mindestens 1 mol 1-Halogen-2,3-epoxyalkan je gÄqu. Gruppen OM des Alkalisalzes des Polyphenols, in wasserfreiem und aprotischem Medium, dadurch gekennzeichnet, daß dieses ausgewählt wird aus der Gruppe Acetonitril, Propionitril, Benzonitril und Ethylensulfid, wobei diese Verbindung mindestens 10 Gew.-% des Reaktionsmediums ausmacht.

2. Verfahren nach Anspruch 1, dadurch gekennzeichnet, daß das Kation des Alkalisalzes des Polyphenols ausgewählt wird aus der Gruppe der Lithium-, Natrium-, Kalium-, Cäsiumkationen und ihrer Gemische.

3. Verfahren nach Anspruch 1 oder 2, dadurch gekennzeichnet, daß das Kation des Polyphenolsalzes ein Natrium- oder Kaliumkation ist.

4. Verfahren nach einem der vorangegangenen Ansprüche, dadurch gekennzeichnet, daß das Kation des Polyphenolsalzes ein Natriumkation ist.

5. Verfahren nach einem der vorangegangenen Ansprüche, dadurch gekennzeichnet, daß das Polyphenol ein Diphenol ist.

6. Verfahren nach einem der vorangegangenen Ansprüche, dadurch gekennzeichnet, daß das Polyphenol ausgewählt wird aus der Gruppe bestehend aus: 1,2-Dihydroxybenzol, 1,4-Dihydroxybenzol, Bisphenol A, Bisphenol F, Bis-2,2-(4-hydroxyphenyl)-1,1-dichlorethylen und Bis-2,2-(3,5-dibrom-4-hydroxyphenyl)-propan.

7. Verfahren nach einem der vorangegangenen Ansprüche, dadurch gekennzeichnet, daß das Polyphenol ausgewählt wird aus der Gruppe Bisphenol A, Bisphenol F und deren Gemische.

8. Verfahren nach einem der vorangegangenen Ansprüche, dadurch gekennzeichnet, daß das Polyphenol Bisphenol A ist.

9. Verfahren nach einem der vorangegangenen Ansprüche, dadurch gekennzeichnet, daß das 1-Halogen-2,3-epoxyalkan ausgewählt wird aus der Gruppe bestehend aus 1-Chlor-2,3-epoxypropan, 1-Brom-2,3-epoxypropan und deren Gemische.

10. Verfahren nach einem der vorangegangenen Ansprüche, dadurch gekennzeichnet, daß das 1-Halogen-2,3-epoxyalkan Epichlorhydrin ist.

11. Verfahren nach einem der vorangegangenen Ansprüche, dadurch gekennzeichnet, daß man in Gegenwart von höchstens 13 mol 1-Halogen-2,3-epoxyalkan je gÄqu. Gruppen OM, die aus dem Alkalisalz des Polyphenols stammen, arbeitet.

12. Verfahren nach einem der vorangegangenen Ansprüche, dadurch gekennzeichnet, daß man in Gegenwart von höchstens 5 mol 1-Halogen-2,3-epoxyalkan je gÄqu. der Gruppe OM aus dem Alkalisalz des Polyphenols arbeitet.

13. Verfahren nach einem der vorangegangenen Ansprüche, dadurch gekennzeichnet, daß man in Gegenwart von Acetonitril arbeitet.

14. Verfahren nach einem der vorangegangenen Ansprüche, dadurch gekennzeichnet, daß die organische Verbindung mehr als 80 Gew.-% des Reaktionsmediums ausmacht.

15. Verfahren nach Anspruch 14, dadurch gekennzeichnet, daß die organische Verbindung mindestens 30 Gew.-% des Reaktionsmediums ausmacht.

16. Verfahren nach einem der vorangegangenen Ansprüche, dadurch gekennzeichnet, daß die Reaktionstemperatur zwischen 50 und 150°C, vorzugsweise zwischen 80 und 120°C liegt.

17. Verfahren zur Herstellung von Glycidylethern von Bisphenol A mittels Umsetzung in aprotischem und heterogenem Medium eines Dinatriumsalzes des Bisphenols A mit Epichlorhydrin in einem Verhältnis von 2 bis 10 mol Epichlorhydrin je mol Dinatriumsalz des Bisphenols A, in Gegenwart von 30 bis 80 Gew.-% Acetonitril und bei einer Temperatur zwischen 80 und 120°C.

18. Verfahren nach einem der vorangegangenen Ansprüche, dadurch gekennzeichnet, daß man in Gegenwart von höchstens 3 mol 1-Halogen-2,3-epoxyalkan je gÄqu. Gruppen OM aus dem Alkalisalz des Polyphenols arbeitet.

19. Verfahren nach einem der vorangegangenen Ansprüche, dadurch gekennzeichnet, daß man nach beendeter Reaktion das Reaktionsgemisch filtriert, um das bei der Umsetzung entstandene Alkalihalogenid abzutrennen, und dann das Filtrat einer Destillation unterwirft, um das nicht umgesetzte 1-Halogen-2,3-epoxyalkan und die ursprünglich zugesetzte organische Verbindung abzutrennen und schließlich das erhaltene Harz isoliert.

## Claims

1. Process for the preparation of glycidyl polyethers of polyphenols by reacting at least one alkali metal salt of a polyphenol with at least one 1-halogeno-2,3-epoxyalkane, in an amount of at least 1 mol of 1-halogeno-2,3-epoxyalkane per gram equivalent of OM groups originating from the alkali metal salt of the polyphenol, in an anhydrous and aprotic medium, characterised in that the latter is chosen from the group comprising acetonitrile, propionitrile, benzonitrile and ethylene sulphide, the said compounds representing at least 10% by weight of the reaction medium.

2. Process according to Claim 1, characterised in that the cation of the alkali metal salt of the polyphenol is chosen from the group comprising lithium, sodium, potassium and caesium cations and mixtures thereof.

3. Process according to Claim 1 or 2, characterised in that the cation of the polyphenol salt is a sodium or potassium cation.

4. Process according to any one of the preceding claims, characterised in that the cation of the polyphenol salt is a sodium cation.

5. Process according to any one of the preceding claims, characterised in that the polyphenol is a diphenol.

6. Process according to any one of the preceding claims, characterised in that the polyphenol is chosen from the group comprising: 1,2-dihydroxybenzene, 1,4-dihydroxybenzene, bisphenol A, bisphenol F, 2,2-bis-(4-hydroxyphenyl)-1,1-dichloroethylene and 2,2-bis-(3,5-dibromo-4-hydroxyphenyl)-propane.

7. Process according to any one of the preceding claims, characterised in that the polyphenol is chosen from the group comprising bisphenol A, bisphenol F and mixtures thereof.

8. Process according to any one of the preceding claims, characterised in that the polyphenol is bisphenol A.

9. Process according to any one of the preceding claims, characterised in that the 1-halogeno-2,3-epoxyalkane is chosen from the group comprising 1-chloro-2,3-epoxypropane, 1-bromo-2,3-epoxypropane and mixtures thereof.

10. Process according to any one of the preceding claims, characterised in that the 1-halogeno-2,3-epoxyalkane is epichlorohydrin.

11. Process according to any one of the preceding claims, characterised in that the reaction is carried out in the presence of at most 13 mols of 1-halogeno-2,3-epoxyalkane per gram equivalent of OM groups originating from the alkali metal salt of the polyphenol.

12. Process according to any one of the preceding claims, characterised in that the reaction is carried out in the presence of at most 5 mols of 1-halogeno-2,3-epoxyalkane per gram equivalent of OM groups originating from the alkali metal salt of the polyphenol.

13. Process according to any one of the preceding claims, characterised in that the reaction is carried out in the presence of acetonitrile.

14. Process according to any one of the preceding claims, characterised in that the organic compound represents at most 80% by weight of the reaction medium.

15. Process according to Claim 14, characterised in that the organic compound represents at least 30% by weight of the reaction medium.

16. Process according to any one of the preceding claims, characterised in that the reaction temperature is between 50 and 150°C and preferably between 80 and 120°C.

17. Process for the preparation of glycidyl ethers of bisphenol A by reacting the disodium salt of bisphenol A with epichlorohydrin, at a rate of 2 to 10 mols of epichlorohydrin per mol of disodium salt of bisphenol A, in an aprotic and heterogeneous medium, in the presence of 30 to 80% by weight of acetonitrile and at a temperature of between 80 and 120°C.

18. Process according to any one of the preceding claims, characterised in that the reaction is carried out in the presence of at most 3 mols of 1-halogeno-2,3-epoxyalkane per gram equivalent of OM groups originating from the alkali metal salt of the polyphenol.

19. Process according to any one of the preceding claims, characterised in that, at the end of the reaction, the reaction mixture is filtered in

order to remove the alkali metal halide formed during the reaction, the filtrate is then subjected to distillation in order to remove therefrom the unreacted 1-halogeno-2,3-epoxyalkane and the organic compound initially introduced, and the resin thus obtained is recovered.